# EUROPÄISCHE PATENTSCHRIFT

(11) **EP 2 838 180 B1**
(45) Veröffentlichungstag und Bekanntmachung des Hinweises auf die Patenterteilung: **15.01.2020**
(21) Anmeldenummer: 13180733.1
(22) Anmeldetag: 16.08.2013
(51) Int. Cl.: H02K 1/02, H02K 1/24, H02K 1/27

(54) **Läufer einer dynamoelektrischen rotatorischen Maschine**
Rotor of a dynamo-electric rotational machine
Rotor d'une machine rotative dynamoélectrique

(43) Veröffentlichungstag der Anmeldung: 18.02.2015
(73) Patentinhaber: Siemens Aktiengesellschaft, 80333 München (DE)
(72) Erfinder: Vollmer, Rolf, 36129 Gersfeld (DE)

(56) Entgegenhaltungen:
- EP-A2- 2 626 988
- DE-A1-102012 200 882

## Beschreibung

Die Erfindung betrifft einen Läufer einer dynamoelektrischen rotatorischen Maschine und die dynamoelektrische rotatorische Maschine selbst, wobei der Läufer richtungsabhängig unterschiedliche Induktivitäten aufweist.

Insbesondere betrifft die Erfindung einen Reluktanzläufer einer dynamoelektrischen rotatorischen Maschine mit einer geradzahligen Anzahl von Polen, wobei das Material der Pole des Reluktanzläufers eine magnetische Strukturanisotropie aufweist, mit in einer Raumrichtung vergleichsweise geringem magnetischen Widerstand, mit einer Permeabilitätszahl von *µ*r > 20 und einer Sättigungspolarisation von >1T und in den anderen beiden Raumrichtungen senkrecht dazu einem vergleichsweise hohen magnetischen Widerstand mit einer Permeabilitätszahl von *µ*r < 1,6, wobei als Material der Pole ein ferromagnetisches Material mit geringer Koerzitivfeldstärke H < 10kA/m eingesetzt ist.

Ferner betrifft die Erfindung einen permanenterregten Läufer.

So sind beispielsweise Reluktanzläufer im bisherigen Elektromaschinenbau mit weichmagnetischem Material aufgebaut und mit Luftspalten in den Blechen des Läufers kombiniert worden um richtungsabhängige unterschiedliche magnetische Widerstände zu erhalten. Damit werden unterschiedliche Induktivitäten in einer d-Achse und einer q-Achse erzeugt und somit tangentiale Kräfte an den Läuferoberflächen herbeigeführt.

Bei permanenterregten Maschinen mit innenliegenden Magneten im Läufer werden gezielte Luftspalte in den weichmagnetischen Blechen des Läufers vorgesehen, um die q-Induktivitäten zu reduzieren.

Nachteilig dabei ist, dass der Herstellungsaufwand für einen derartigen Läufer vergleichsweise groß ist. Der Wirkungsgrad von derartigen dynamoelektrischen rotatorischen Maschinen ist vergleichsweise gering.

Aus der EP 2 626 988 A2 sind ein Verfahren zur Herstellung eines Rotors für eine Synchron-Reluktanzmaschine sowie ein entsprechender Rotor bekannt, wobei in einem ersten Schritt eine magnetisch nicht leitende präpolymere und/oder polymere Grundmasse mit magnetisch leitenden Partikeln versetzt wird und in einem zweiten Schritt durch Anlegen eines magnetischen Feldes die Partikel ausgerichtet werden um wenigstens ein magnetisches Polpaar zu erzeugen.

Des weiteren offenbart die EP 2 626 988 A2 einen Reluktanzläufer gemäß der Präambel des Anspruchs 1.

Aus der DE 10 2012 200 882 A1 sind eine Lamelle für einen Rotor einer elektrischen Maschine sowie ein derartiger Rotor bekannt, die sich konzentrisch um eine Durchgangsbohrung erstreckt, welche zur Aufnahme einer Welle vorgesehen ist und die eine Vielzahl von Aussparungen aufweist, in die Dauermagnete einführbar sind, wobei zwischen benachbarten Dauermagneten jeweils ein Lamellensegment angeordnet ist, und wobei zumindest eine der Aussparungen eine Klemmnase umfasst, die einen in diese Aussparung einführbaren Dauermagneten in einer radialen Richtung in der Aussparung fixiert, wobei die Klemmnase diesen Dauermagneten zudem in einer tangentiale Richtung in der Aussparung fixiert.

Des weiteren offenbart die DE 10 2012 200 882 A1 einen permanenterregten Läufer mit im wesentlichen radial angeordneten Dauermagneten, die durch Material mit magnetischer Strukturanisotropie voneinander getrennt sind, mit in zwei Raumrichtungen vergleichsweise geringem magnetischen Widerstand mit einer Permeabilitätszahl größer als 20 und einer Sättigungspolarisation von >1T, und in der anderen Raumrichtung senkrecht dazu einem vergleichsweise hohen magnetischen Widerstand.

Ausgehend davon liegt der Erfindung die Aufgabe zugrunde, einen im Aufbau einfachen Läufer, insbesondere Reluktanzläufer zu schaffen, der elektrische und dynamische Eigenschaften wie permanenterregte Synchronmotoren aufweist.

Die Lösung der gestellten Aufgabe gelingt durch einen Reluktanzläufer nach Anspruch 1.

Die Lösung der gestellten Aufgaben gelingt auch durch einen permanenterregten Läufer nach Anspruch 2.

Die Lösung der gestellten Aufgaben gelingt auch durch eine dynamoelektrische rotatorische Maschine mit einem Stator, der ein Wicklungssystem aufweist, das ein Magnetfeld erzeugt, das im Betrieb der dynamoelektrischen rotatorischen Maschine mit einem Läufer nach nach Anspruch 1 oder 2 elektromagnetisch wechselwirkt.

Die Lösung der gestellten Aufgabe gelingt auch durch eine Verwendung einer dynamoelektrischen rotatorischen Maschine nach Anspruch 4.

Erfindungsgemäß wird der Reluktanzläufer nunmehr mit Materialien mit magnetischer Strukturanisotropie versehen. Das Material weist in einer Raumrichtung einen geringen magnetischen Widerstand *µ*r>20 und eine Sättigungspolarisation von B > 1T auf. In den beiden anderen Raumrichtungen senkrecht dazu verhält es sich ähnlich wie Luft und weist ein *µ*r<1,6 auf. In diesen beiden anderen Raumrichtungen liegt ein vergleichsweise größer magnetischer Widerstand vor.

Dieser Aufbau bewirkt einen ähnlichen Wirkungsgrad wie bei permanenterregten Synchronmaschinen. Bei diesem Material mit magnetischer Strukturanisotropie handelt es sich nicht um vollwertige Permanentmagnete, die eine eigene Erregung des Läufers bilden, vielmehr wird durch die Strukturanisotropie der von dem Stator erzeugte magnetische Fluss in einer Raumrichtung - die auch abschnittsweise veränderbar sein kann mit geringem magnetischen Widerstand geführt.

Dadurch, dass keine vollwertigen Permanentmagnete herzustellen, nämlich nicht aufzumagnetisieren sind, werden die Produktionskosten gesenkt.

Dieses Material mit magnetischer Strukturanisotropie weist nur eine vergleichsweise geringe Koerzitivfeldstärke auf.

Dabei wird hauptsächlich Neodym-Eisen-Bor eingesetzt, das in der erfinderischen Ausprägung eine geringe Koerzitivfeldstärke <10kA/m aufweist.

Der Einsatz dieser Materialien führt bei dynamoelektrischen Maschinen zu neuen Konstruktionsmerkmalen. Der Fluss kann nunmehr gerichtet geführt werden, was zu geringen Streuungen führt und den Wirkungsgrad der dynamoelektrischen Maschine insbesondere gegenüber herkömmlichen Reluktanzmaschinen erhöht. Induktivitäten des Läufers werden bereits bei der Konstruktion des Läufers richtungsabhängig beeinflusst bzw. eingestellt, so dass sich zwei-, vier-, sechs-, acht- oder mehrpolige Läufer ergeben.

In einer weiteren Ausführung der Erfindung werden durch die magnetische Strukturanisotropie bei permanenterregten Maschinen mit innenliegenden Ferritmagneten, die radial angeordnet sind, die Querinduktivitäten gesenkt. Dies führt zu einer vergleichsweise höheren Linearität der Strom-Momenten-Charakteristik der dynamoelektrischen Maschine.

Die Erfindung sowie weitere vorteilhafte Ausgestaltungen der Erfindung sind den Figuren zu entnehmen; dabei zeigen:
- FIG 1: eine prinzipielle Darstellung der magnetischen Eigenschaften des Materials,
- FIG 2: einen zweipoligen Reluktanzläufer,
- FIG 3: einen vierpoligen Reluktanzläufer,
- FIG 4: einen Stator und einen Rotor einer permanenterregten Maschine mit innenliegenden Magneten,
- FIG 5: eine Reluktanzmaschine im Querschnitt
- FIG 6: einen Stator und einen Rotor einer permanenterregten Maschine mit innenliegenden Magneten mit prinzipiell dargestelltem Feldlinienverlauf,
- FIG 7: eine Reluktanzmaschine im Querschnitt mit prinzipiell dargestelltem Feldlinienverlauf.

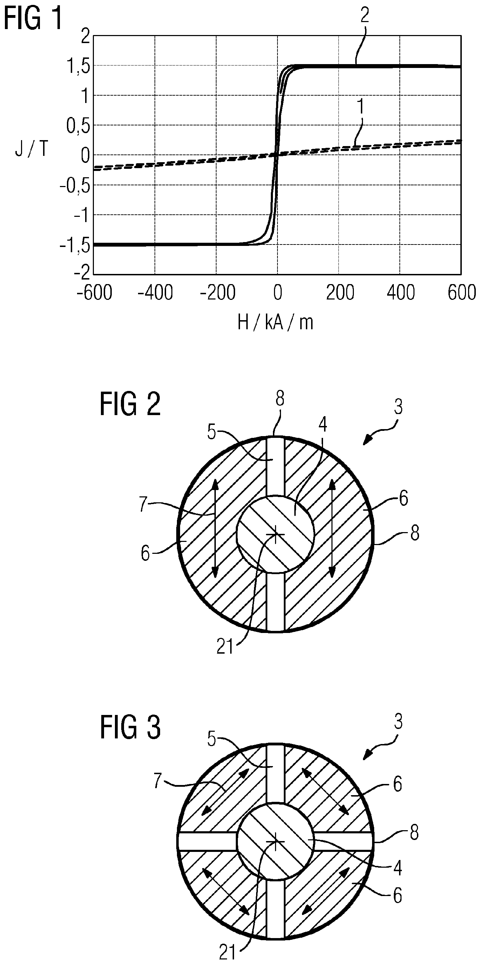

FIG 1 zeigt in einer Darstellung die magnetischen Eigenschaften des verwendeten Materials mit magnetischer Strukturanisotropie auf der Basis von Neodym-Eisen-Bor. Dabei ist die magnetische Flussdichte B über der magnetischen Feldstärke H aufgetragen. Mit "2" ist dabei die Kurve bezeichnet mit *µ*r > 20 und mit geringem magnetischen Widerstand. Mit "1" sind die anderen Raumrichtungen bezeichnet, die einen vergleichsweise hohen magnetischen Widerstand aufweisen.

FIG 2 zeigt einen Reluktanzläufer 3 mit zwei Polen 6, die durch eine Pollücke 5 voneinander getrennt sind. Der Pfad mit geringem magnetischem Widerstand ist dabei mit "7" bezeichnet. Die Pole 6 sind dabei über stoffschlüssige Verbindungen mit einer Welle 4 und der Pollücke 5 verbunden. Zusätzlich, oder stattdessen kann diese Gesamtanordnung auch durch eine Bandage 8 in Umfangsrichtung fixiert werden.

FIG 3 zeigt einen Reluktanzläufer 3 mit vier Polen 6, die durch Pollücken 5 voneinander getrennt sind. Der Pfad mit geringem magnetischem Widerstand ist dabei mit "7" bezeichnet. Die Pole 6 sind dabei über stoffschlüssige Verbindungen mit einer Welle 4 und den Pollücken 5 verbunden. Zusätzlich, oder stattdessen kann diese Gesamtanordnung auch durch eine Bandage 8 in Umfangsrichtung fixiert werden.

Die Pollücken 5 dieser Reluktanzläufer 3 sind dabei vorzugsweise aus amagnetischem Material.

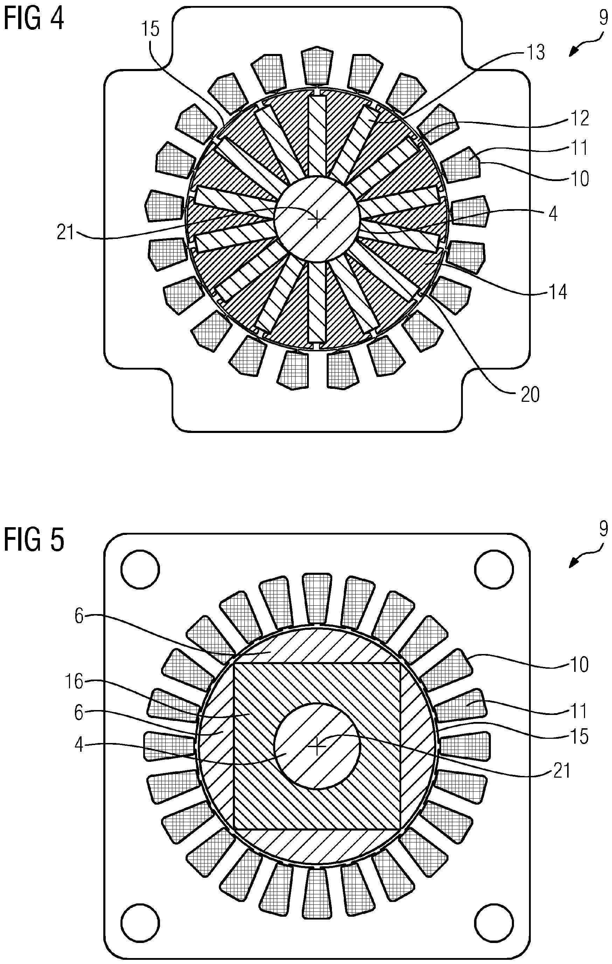

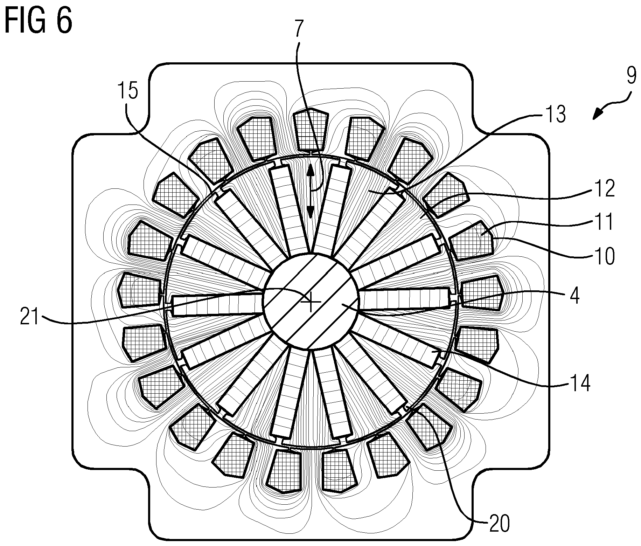

FIG 4 zeigt im Querschnitt eine dynamoelektrische rotatorische Maschine 9 mit einem Stator und einem in Nuten 10 des Stators angeordneten Wicklungssystem 11. Die Nuten 10 weisen zu einem Luftspalt 15 der dynamoelektrischen rotatorischen Maschine 9. Der Läufer dieser Maschine 9 weist radial angeordnete Ferritmagnete 13 auf, deren Feldlinien innerhalb des Ferritmagneten 13 tangential verlaufen (siehe FIG 6). Die Ferritmagnete 13 sind in Umfangsrichtung betrachtet durch Segmente 14 voneinander getrennt. In dieser Ausführung sind die Segmente 14 in Umfangsrichtung zwischen den Ferritmagneten 13 angeordnet und halten diese, indem sie die Ferritmagnete 13 im Bereich des Luftspaltes 15 zumindest teilweise tangential abdecken bzw. umgreifen. Diese Abdeckungen 20 eignen sich im Bereich des Luftspaltes 15 auch zur Flussführung. Die Segmente 14 weisen das strukturanisotrope Material auf, um durch die magnetische Strukturanisotropie die magnetische Erregung des Läufers, die durch die Ferritmagnete 13 hervorgerufen wird zu unterstützen.

FIG 5 zeigt eine weitere dynamoelektrische Maschine 9 mit einem Reluktanzläufer mit vier Polen 6, die als außenliegende Segmente vorliegen. Zwischen den bestromten Wicklungen 11 des Stators und dem Reluktanzläufer 3 treten elektromagnetische Wechselwirkungen auf, die den Reluktanzmotor unter Abgabe eines Drehmoments in Drehung versetzen. Für die elektromagnetische Wechselwirkung sind dabei vorzugsweise die dem Luftspalt 15 zugewandten Abschnitte der Pole 6 maßgebend. In dieser Ausführung ist deshalb die Welle 4 von einer Edelstahlhülse 16 umgeben, an der die Pole 6 befestigt sind. Die Pole 6 aus strukturanisotropem Material sind an dieser Edelstahlhülse positioniert, indem sie formschlüssig oder stoffschlüssig - z.B. durch Klebung - mit der Edelstahlhülse 16 verbunden sind.

Die Pole 6 können dabei genauso auf oder an einer Hohlwelle positioniert werden, in der beispielsweise Getriebeeinheiten oder Steuerungselemente eines Motors zumindest teilweise angeordnet sind.

Die Pole 6 aus strukturanisotropem Material, sind dabei pro Pol einstückig ausgeführt. In einer anderen Ausführung sind die Pole 6 jeweils aus mehreren Teilen aufgebaut. Dabei sind die Grenzebenen der aneinander grenzenden Teile eines Pols 6 achsparallel oder senkrecht zur Achse angeordnet.

FIG 6 zeigt eine dynamoelektrische rotatorische Maschine 9 gemäß FIG 4 wobei ein prinzipieller Feldlinienverlauf im Blech des Stators, den Segmenten 14 des Läufers und den Ferritmagneten 13 dargestellt ist. In den Segmenten 14 zwischen den Ferritmagneten 13 verlaufen die Feldlinien aufgrund der vorgesehenen magnetischen Strukturanisotropie des Materials der Segmente 14 nahezu radial und parallel, mit der durch "7" gekennzeichneten Vorzugsrichtung, da dort materialbedingt der geringste magnetische Widerstand vorhanden ist. Die Feldlinien innerhalb der Ferritmagnete 13 verlaufen tangential. Durch den optimierten Feldlinienverlauf wird eine vergleichsweise höhere Ausnutzung der dynamoelektrischen rotatorischen Maschine 9 erreicht.

In FIG 6 ist nur die Welle 4 schraffiert und das Wicklungssystem 11 kariert zeichnerisch hervorgehoben. Die Linien im Blech des Stators, die Linien in den Ferritmagneten 13 und die radialen Linien in den Segmenten 14 stellen magnetische Feldlinien dar.

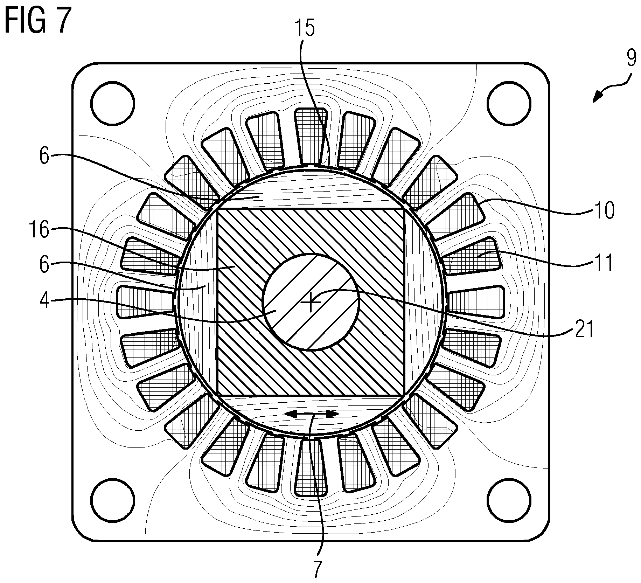

FIG 7 zeigt eine dynamoelektrische rotatorische Maschine 9 gemäß FIG 5 wobei ein prinzipieller magnetischer Feldlinienverlauf im Blech des Stators und in den auf der Edelstahlhülse 16 angeordneten Polen 6 des Läufers dargestellt ist. Die Feldlinien in den Polen 6 verlaufen nahezu tangential zur Achse 21 bzw. in dieser Ausführung parallel zur jeweiligen Kante der Edelstahlhülse 16, an der die Pole 6 angeordnet sind.

In FIG 7 ist nur die Welle 4 und die Edelstahlhülse 16 schraffiert und das Wicklungssystem 11 kariert zeichnerisch hervorgehoben. Die Linien im Blech des Stators und die Linien in den Polen 6 mit ihrer Vorzugsrichtung "7" stellen magnetische Feldlinien dar.

Dynamoelektrische rotatorische Maschinen 9 mit den oben beschriebenen Läufern verhalten von ihrer Ausnutzung bzw. ihren Betriebseigenschaften wie permanenterregte Synchronmaschinen mit Selten-Erden-Magneten.

Derartige dynamoelektrische rotatorische Maschinen 9 mit den oben beschriebenen Läufern eignen sich für Werkzeugmaschinenantriebe und für Antriebe in der Fahrzeugtechnik, wie z.B. Schienenfahrzeuge, E-Bikes und E-Cars.

## Patentansprüche

1. Reluktanzläufer (3) einer dynamoelektrischen rotatorischen Maschine (9) mit einer geradzahligen Anzahl von Polen (6), wobei das Material der Pole (6) des Reluktanzläufers eine magnetische Strukturanisotropie aufweist, mit in einer Raumrichtung vergleichsweise geringem magnetischen Widerstand, mit einer Permeabilitätszahl von *µ*r > 20 und einer Sättigungspolarisation von >1T und in den anderen beiden Raumrichtungen senkrecht dazu einem vergleichsweise hohen magnetischen Widerstand mit einer Permeabilitätszahl von *µ*r < 1,6, wobei als Material der Pole (6) ein ferromagnetisches Material mit geringer Koerzitivfeldstärke H < 10kA/m eingesetzt ist,
**dadurch gekennzeichnet, dass** als Material der Pole (6) ein Materialgemisch auf Basis Neodym-Eisen-Bor eingesetzt ist, wobei das Materialgemisch nicht aufmagnetisiert ist.

2. Permanenterregter Läufer mit im wesentlichen radial angeordneten Ferritmagneten (13), die durch Material mit magnetischer Strukturanisotropie voneinander getrennt sind, mit in einer Raumrichtung vergleichsweise geringem magnetischen Widerstand, mit einer Permeabilitätszahl von *µ*r > 20 und einer Sättigungspolarisation von >1T, und in den anderen beiden Raumrichtungen senkrecht dazu einem vergleichsweise hohen magnetischen Widerstand mit einer Permeabilitätszahl von *µ*r < 1,6, wobei als Material der Pole (6) ein ferromagnetisches Material mit geringer Koerzitivfeldstärke H < 10kA/m eingesetzt ist, wobei als Material der Pole (6) ein Materialgemisch auf Basis Neodym-Eisen-Bor eingesetzt ist, wobei das Materialgemisch nicht aufmagnetisiert ist.

3. Dynamoelektrische rotatorische Maschine (9) mit einem Stator, der ein Wicklungssystem (11) aufweist, das ein Magnetfeld erzeugt, das im Betrieb der dynamoelektrischen rotatorischen Maschine (9) mit einem Läufer nach einem der vorhergehenden Ansprüche, elektromagnetisch wechselwirkt.

4. Verwendung einer dynamoelektrischen rotatorischen Maschine (9) nach Anspruch 3 mit einem Läufer nach einem der vorhergehenden Ansprüche 1 bis 2 als Antrieb für Werkzeugmaschinen oder in der Fahrzeugtechnik.

## Claims

1. Reluctance rotor (3) of a dynamoelectric rotary machine (9) having an even number of poles (6), wherein the material of the poles (6) of the reluctance rotor exhibit magnetic structural anisotropy, having comparatively low magnetic resistance in one spatial direction, with a relative permeability of µr > 20 and a saturation polarisation of > 1T and, in the other two spatial directions perpendicular thereto, a comparatively high magnetic resistance with a relative permeability of µr < 1.6, wherein a ferromagnetic material having low coercive field strength H < 10kA/m is used as the material for the poles (6),
**characterised in that** a neodymium-iron-boron based composite is used as the material for the poles (6), wherein the composite is not magnetised.

2. Permanently excited rotor with essentially radially disposed ferrite magnets (13) which are separated from one another by material exhibiting magnetic structural anisotropy, having comparatively low magnetic resistance in one spatial direction, with a relative permeability of µr > 20 and a saturation polarisation of > 1T and, in the other two spatial directions perpendicular thereto, a comparatively high magnetic resistance with a relative permeability of µr < 1.6, wherein a ferromagnetic material having low coercive field strength H < 10kA/m is used as the material for the poles (6), wherein a neodymium-iron-boron based composite is used as the material for the poles (6), wherein the composite is not magnetised.

3. Dynamoelectric rotary machine (9) comprising a stator having a system of windings (11) which generates a magnetic field which, during operation of the dynamoelectric rotary machine (9), interacts electromagnetically with a rotor according to one of the preceding claims.

4. Use of a dynamoelectric rotary machine (9) according to claim 3 having a rotor according to one of the preceding claims 1 to 2 as a drive for machine tools or in automotive engineering.

## Revendications

1. Rotor (3) à réluctance d'une machine (9) dynamo-électrique tournante, ayant un nombre paire de pôles (6), le matériau des pôles (6) du rotor à réluctance ayant une anisotropie magnétique de structure, ayant, dans une direction de l'espace, une résistance magnétique relativement petite avec un indice de perméabilité de *µ*r > 20 et une polarisation de saturation > 1T et, dans les deux autres directions de l'espace, perpendiculairement à celle-ci, une résistance magnétique relativement grande avec un indice de perméabilité de *µ*r < 1,6, dans lequel on utilise, comme matériau des pôles (6), un matériau ferromagnétique, ayant une intensité H de champ coercitif petite, < 10kA/m,
**caractérisé en ce que** l'on utilise, comme matériau des pôles (6), un mélange de matériaux à base de néodyme, de fer et de bore, le mélange de matériaux n'étant pas aimanté.

2. Rotor à excitation permanente, comprenant des aimants (13) de ferrite montés sensiblement radialement, qui sont séparés les uns des autres par du matériau ayant une anisotropie magnétique de structure, ayant, dans une direction de l'espace, une résistance magnétique relativement petite avec un indice de perméabilité de *µ*r > 20 et une polarisation de saturation > 1T et, dans les deux autres directions de l'espace, perpendiculairement à celle-ci, une résistance magnétique relativement grande avec un indice de perméabilité de *µ*r < 1,6, dans lequel on utilise, comme matériau des pôles (6), un matériau ferromagnétique, ayant une intensité H de champ coercitif petite, < 10kA/m, dans lequel on utilise comme matériau des pôles (6) un mélange de matériaux à base de néodyme, de fer et de bore, le mélange de matériaux n'étant pas aimanté.

3. Machine (9) dynamoélectrique tournante, comprenant un stator, qui a un système (11) d'enroulement produisant un champ magnétique, qui, lorsque la machine (9) dynamo-électrique tournante est en fonctionnement, interagit électromagnétiquement avec un rotor suivant l'une des revendications précédentes.

4. Utilisation d'une machine (9) dynamo-électrique tournante suivant la revendication 3, avec un rotor suivant l'une des revendications 1 à 2 précédentes, comme entraînement de machine-outil ou dans la technique des véhicules.
